# EUROPEAN PATENT APPLICATION

(11) **EP 0 623 983 A1**
(43) Date of publication of application: **09.11.1994**
(21) Application number: 94201148.7
(22) Date of filing: 28.04.1994
(51) Int. Cl.: H02G 3/06, F16L 37/084

(54) **Conduit connector**

(30) Priority: 05.05.1993 IT MI930893
(71) Applicant: MEC 2000 S.R.L., I-20090 Trezzano Sul Naviglio (Milano ) (IT)
(72) Inventor: Guaglione, Angelo, I-20088 Gudo Visconti, Milano (IT)
(74) Representative: Fusina, Gerolamo

(57) **Abstract**

The connector (1) comprises a female first element (2), a male second element (3) and an interposed gasket (4) acting as a connection element between the two elements (2, 3) which remain however free to mutually rotate about the connector axis (5). The component elements of the connector (1) can be sold separately as the non-releasable connection is formed simply by forcing the male element (3) into the female element (2) and can therefore be made by the installer immediately prior to installation.

## Description

This invention relates to a connector for conduit, in particular for electric cables.

Conduit containing electric cables is currently connected to the electrical user by connectors in accordance with the introduction to claim 1.

The last step in making the connection comprises clinching the inner end of the male element so that the two elements of the connector remain inseparably fixed together but able to rotate relative to each other, so enabling the installer to mount the connector without it being necessary to rotate the elements converging towards it, whether these be conduits or the terminal block of an electrical user. The installer installing such connectors selects those necessary on the basis of the two types of thread with which each connector is provided. The existence of various types of thread requires the availability of numerous types of connector and still more numerous reducers to allow possible adaptation.

The need for the availability of such a wide range of connection products is a source of inconvenience for the manufacturer and seller, but in particular for the installer, who has only a small probability of carrying the appropriate connectors on site, particularly in the case of work which has not been previously programmed in detail.

The object of the present invention is to obviate the aforesaid inconvenience.

This object is attained by a connector in accordance with claim 1. At the moment of use the male element and female element (this latter provided with a hydraulic seal gasket) suitably chosen from the various ones available, can be forced into engagement by the installer to form the appropriate connection.

The installer can therefore form the necessary connector by selecting from a small number of male and female elements which differ only in the thread which they carry. Reduction or adaptation elements are superfluous, and consequently the producer, seller and installer need therefore produce, stock and purchase only the various types of male and female elements which can be variously combined to form the required connector from the various connectors obtainable.

The invention is illustrated by way of non-limited example on the figures of the accompanying drawings.

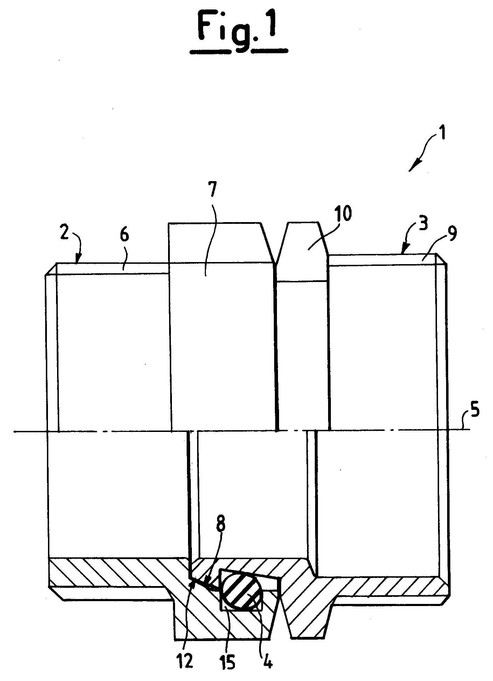

Figure 1 is a partly full and partly sectional view of a connector of the invention in its mounted configuration;

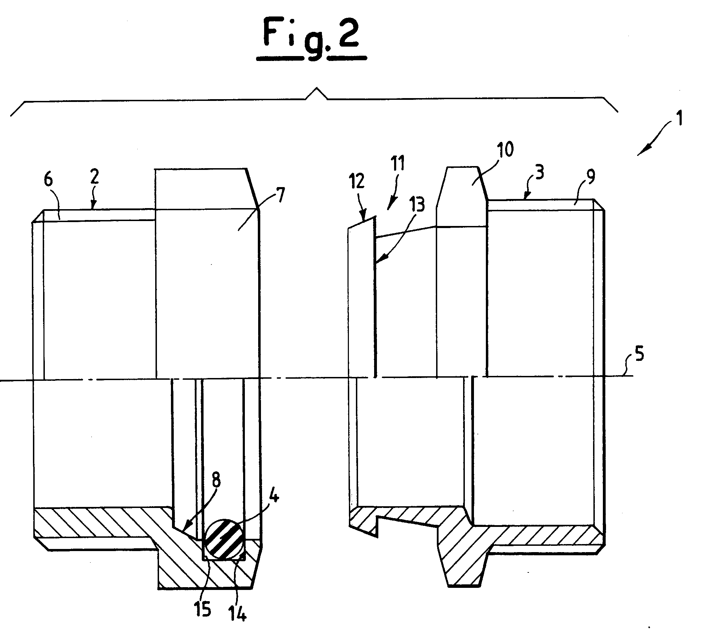

Figure 2 is a partly full and partly sectional view of the connector of Figure 1 in its exploded configuration.

With reference to said figures, the connector of the invention, indicated overall by 1, comprises a female first element 2, a male second element 3 and a hydraulic seal gasket 4.

The female first element 2 comprises a first threaded portion 6 and a first handling element 7 arranged coaxial to each other on an axis 5.

The thread is provided on the outside of the first threaded portion 6. The first handling element 7 consists preferably of a common hexagon. On the inside of the first handling element 7 there are a first conical surface 8 and a seat 15 for the hydraulic seal gasket 4, which is preferably of circular cross-section and being of O-ring type.

The male second element 3 comprises a second threaded portion 9, a second handling element 10 and an annular portion 11 which are arranged coaxial to each other on the axis 5.

The second threaded portion 9 is threaded externally. The second handling element 10 is also formed from a traditional hexagon.

The annular portion 11 comprises a second conical surface 12 converging towards the connector axis 5, and an undercut surface 13.

The female element 2 and male element 3 of the connector 1 are manufactured by lathe turning. A number of different versions of the female element 2 and male element 3 exist based on the threads present on the relative first threaded portion 6 and second threaded portion 9. The female element 2 and male element 3 of the connector 1 are sold separately to enable the installer to form the desired connection just before mounting, by fitting together the necessary female element 2 and male element 3.

For mounting, it is necessary merely to force the annular portion 11 of the male element 3 into the female element 2 so that the undercut surface 13 becomes positioned adhering to the gasket 4 and opposite the surface 14 of the seat 15. The first conical surface 8 is engaged by the second 12.

The conicity of the second conical surface 12 and the elasticity of the gasket 4 enable the condition to be achieved by which the female element 2 and male element 3 are able to be mutually rotated about the axis 5. However the female element 2 and male element 3 cannot be separated because the gasket 4 prevents it by virtue of being interposed between the undercut surface 13 of the male element 3 and the surface 14 of the female element 2.

The gasket 4 therefore acts both as a hydraulic seal element and a mechanical stop element interposed between the first element 2 and the second element 3.

Electrical continuity between the female element 2 and male element 3 of the connector 1 is however provided by the engagement between at least the conical surfaces 8 and 12. In special cases the gasket 4 can be formed of a material which although being elastic also provides electrical continuity.

## Claims

1. A connector (1) for conduit, in particular for cable, of the type comprising a female first element (2) and a male second element (3) coaxially joined together but such that they can rotate relatively about their axis, in which:
- said female first element (2) comprises coaxial to each other a first threaded portion (6) and a first handling element (7);
- said second male second element (3) comprises coaxial to each other a second threaded portion (9), a second handling element (10) and an annular portion (11) housable within said female first element (2);
- a hydraulic seal gasket (4) interposed between said first element (2) and said second element (3),
characterised in that said hydraulic seal gasket (4) is of elastic material, the connection being made by interposing said gasket (4) between an undercut (13) in the male element (3) and the wall (14) of the seat (15) for the gasket, which faces it.

2. A connector as claimed in claim 1, characterised in that the hydraulic seal gasket (4) is an O-ring.

3. A connector as claimed in claim 1, characterised in that the undercut (13) in the male element (3) is associated with a second conical surface (12) converging towards the axis (5) of the connector (1) and intended to abut against a corresponding first conical surface (8) on the female element (2).
